Europäisches Patentamt

European Patent Office

Office européen des brevets

(11) Veröffentlichungsnummer: **0 199 296**
**B1**

(12) # EUROPÄISCHE PATENTSCHRIFT

(45) Veröffentlichungstag der Patentschrift:
08.11.89

(21) Anmeldenummer: 86105352.8

(22) Anmeldetag: **17.04.86**

(51) Int. Cl.⁴: **B01J 8/10**
// C08F2/10

(54) Vorrichtung zur Feststoffbettpolymerisation von Monomeren.

(30) Priorität: 20.04.85 DE 3514367

(43) Veröffentlichungstag der Anmeldung:
29.10.86 Patentblatt 86/44

(45) Bekanntmachung des Hinweises auf die Patenterteilung:
08.11.89 Patentblatt 89/45

(84) Benannte Vertragsstaaten:
AT BE CH DE FR GB IT LI NL SE

(56) Entgegenhaltungen:
DE-A- 2 616 699
FR-A- 2 310 359
US-A- 3 457 161
US-A- 4 101 289
US-A- 4 535 134

(73) Patentinhaber: BASF Aktiengesellschaft,
Carl-Bosch-Strasse 38, D-6700 Ludwigshafen(DE)

(72) Erfinder: Hennig, Karl, Beethovenstrasse 26,
D-6717 Hessheim(DE)
Erfinder: Messmer, Karlheinz, Dr., Auf Kies 6,
D-6719 Weisenheim(DE)
Erfinder: Hoerdt, Guenter, Friedensstrasse 16,
D-6711 Grossniedesheim(DE)
Erfinder: Kleinpeter, Gerhard, Breslauer Strasse 35,
D-6715 Lambsheim(DE)
Erfinder: Hoffmann, Werner, Oppelner Strasse 5,
D-6711 Beindersheim(DE)
Erfinder: Raubenheimer, Hans-Juergen, Benzstrasse 6,
D-6834 Ketsch(DE)

## Beschreibung

Die vorliegende Erfindung betrifft einen horizontalen Feststoffbettpolymerisationsreaktor, der in mehrere Zonen, z.B. eine Reaktionszone, eine Nachreaktionszone, eine Temperzone und eine Produktaustragszone unterteilt ist, mit Ein- und Auslaßöffnungen zur Stoffzuführung und Stoffabführung in die und/oder aus den Zonen, wobei die Zonen durch Wehre über einen Teil des Reaktorquerschnitts voneinander abgetrennt sind.

Aus der Patentschrift DE-2 556 418 ist ein Reaktor der eingangs genannten Art bekannt, der der Dampfphasenpolymerisation dient. Dieser weist als Merkmal zwar die Einteilung in Sektionen auf, jedoch können die Rührbedingungen über die gesamte Reaktorlänge infolge einer durchgängigen Antriebswelle nicht verändert werden. Seine Anwendung ist dahingehend eingeschränkt, als in diesem Reaktor ausschließlich wasserunlösliche Polymere nach der Methode der Dampfphasenpolymerisation hergestellt werden können.

Des weiteren ist bei diesem Reaktor nicht die Möglichkeit gegeben, den hold up bzw. den Grad der Durchmischung im Betriebszustand zu verändern.

Ein weiterer horiyontaler Reaktor für die Gasphasenpolymerisation von Monomeren ist aus der Patentschrift US 4 101 289 bekannt.

Es war daher Aufgabe der vorliegenden Erfindung, einen universellen, nicht nur auf die Dampfphasenpolymerisation beschränkten Reaktor zu entwickeln, der es ermöglicht, wasserlösliche oder wasserquellbare, feste Polymerisate mit hoher Polymerisatausbeute und in rieselfähiger Produktform zur Verfügung zu stellen, die beispielsweise als Dispergier-, Papier, Textil- oder Waschhilfsmittel verwendet werden können.

Diese Aufgabe wird erfindungsgemäß dadurch gelöst, daß in den Feststoffbettpolymerisationsreaktor zwei horizontale, voneinander unabhängige Antriebswellen mit transversal angeordneten Mischelementen koaxial und mittig eingeführt sind. Durch diese Mischelemente und die verschiedenen Drehzahlen der beiden Wellen wird das pulverförmige Polymerisat über die gesamte Länge des Feststoffbettpolymerisationsreaktors in unterschiedlichem Bewegungszustand gehalten, wodurch der Ablauf der Polymerisation, der Neutralisation, der Nachpolymerisation und der Temperung gesteuert werden kann.

Die folgenden Zonen des Reaktors werden über eine zweite, von der ersten unabhängigen Welle, auf der sich ebenfalls transversal angeordnete Paddel befinden, nur geringfügig radial durchmischt, so daß in einer Art Pfropfenströmung ein Tempereffekt über eine lange Verweilzeit von mehreren Stunden erreicht und dadurch der Restmonomerengehalt weiter abgesenkt wird.

Gemäß einer vorteilhaften Ausgestaltung der Erfindung sind die eingangs beschriebenen Wehre in ihrem freien Querschnitt veränderbar, wodurch über eine Veränderung des Feststoff-hold up eine Beeinflussung der Verweilzeit, insbesondere der Temperungszeit in der Temperzone und somit auch der Polymerisatausbeute erreicht wird.

Die Erfindung beinhaltet, daß die Wehre um die Antriebswelle drehbar angeordnet sind. Dadurch wird erreicht, daß die erwähnte Änderung des Feststoff-hold up während des Betriebes erfolgen kann und fernerhin eine Entleerung des Feststoffbettpolymerisationsreaktors in einfacher Weise durch Drehen der Öffnung nach unten erfolgen kann.

Eine bevorzugte Ausführung der Erfindung besteht darin, daß in den Antriebswellen Temperaturfühler für die einzelnen Zonen angebracht sind. Sie ermöglichen die Temperaturkontrolle des Polymerisates im Feststoffbettpolymerisationsreaktor, wenn die einzelnen Zonen des Feststoffbettpolymerisationsreaktors unterschiedlich temperiert sind. Mit dieser unterschiedlichen Temperierung können bevorzugt die Polymerisationsgeschwindigkeit, das mittlere Molekulargewicht und die Polymerisatausbeute gesteuert werden.

Ferner besteht eine besonders vorteilhafte Ausgestaltung der Erfindung darin, daß zwei oder mehrere Antriebswellen konzentrisch angeordnet sind, wodurch ein Ende des Feststoffbettpolymerisationsreaktors zum Beobachten des Rührbettes mittels eines an der der Antriebsseite gegenüb erliegenden Stirnseite angeordneten Schauglases ausgerüstet werden kann. Außerdem besteht durch diese freie Seite die Möglichkeit der schnellen Reinigung des Feststoffbettpolymerisationsreaktors.

Mit der Erfindung wird daher ein Reaktor geschaffen, mit dem sich ein polymerisierbares Monomeres oder eine polymerisierbare Monomerenmischung in effizienter Weise in Polymerisate überführen läßt.

Die Polymerisation wird in einem Pulverbett durchgeführt, d.h. im horizontalen Feststoffbettpolymerisationsreaktor wird zunächst ein Pulver vorgelegt. Als Pulver eignen sich sowohl anorganische als auch organische pulverförmige Materialien, die unter den Reaktionsbedingungen nicht mit den Monomeren oder Polymeren reagieren. Geeignete pulverförmige Materialien sind beispielsweise Quarzmehl, Talkum, Aluminiumoxid, Kochsalz, Glasperlen oder inerte Polymergranulate. Vorzugsweise legt man jedoch in der Polymerisationszone ein inertes pulverförmiges Polymerisat vor, das der Zusammensetzung des sich aus dem Monomerengemisch bzw. dem zu polymerisierenden Monomeren neu bildenden Polymerisates entspricht. Diese Polymerisate werden - falls kein pulverförmiges Polymerisat zur Verfügung steht - nach bekannten Polymerisationsverfahren hergestellt, z.B. durch Polymerisieren der Monomeren in Substanz und Zerkleinern des festen Polymerisates, durch Polymerisieren der Momomeren in einer Wasser-in-Öl-Emulsion und Ausfällen und Isolieren des gebildeten Polymerisates oder durch Fällungs- oder Perlpolymerisation. Der Teilchendurchmesser der pulverförmigen Materialien liegt zwischen 10μm und 20 mm.

Der Pulverzustand in der Polymerisationszone wird während der gesamten Polymerisationsdauer aufrechterhalten. Die Monomerenlösung bzw. -emulsion wird vorzugsweise in feiner Verteilung auf das Pulver in der Polymerisationszone aufgebracht. Dieser Verfahrensschritt geschieht in der Regel durch Versprühen der Monomerenlösung, entweder auf das Pulverbett oder auch direkt im Pulverbett. Die Monomeren werden in dem Maße in die Polymerisationszone eingebracht, in dem sie auch polymerisieren. Dies kann entweder kontinuierlich oder absatzweise erfolgen. Während der Polymerisation ist für eine ausreichende Umwälzung der Reaktionsmasse zu sorgen. Die bei der Polymerisation entstehende Wärme sowie die durch Umwälzung des Pulvers entstehende, werden durch kontinuierliches Verdampfen des Lösungsmittels bzw. der Lösungsmittelmischungen aus der Reaktionszone entfernt. Vorzugsweise wird die Konzentration der Monomeren in dem organischen Lösungsmittel so gewählt, daß bei vollständiger Polymerisation der Monomeren die freigesetzte Polymerisationsenthalpie gerade ausreicht, um die Lösungsmittel unter den herrschenden Reaktionsbedingungen durch Verdampfen vollständig aus der Polymerisationszone zu entfernen.

Geeignete ethylenisch ungesättigte Verbindungen, die erfindungsgemäß polymerisiert werden, sind in Wasser löslich oder quellbar und bilden hydrophile Polymerisate. Beispielhaft genannt seien ethylenisch ungesättigte C$_3$- bis C$_5$-Carbonsäuren, Dicarbonsäuren und deren Anhydride wie Acrylsäure, Methacrylsäure, Maleinsäure, Maleinsäureanhydrid, Fumarsäure, Itakonsäure, Diamide, ethylenisch ungesättigte Carbonsäuren, vor allem Acrylamid und Methacrylamid sowie basische Acrylamide und Methacrylamide wie Dialkylaminoalkylacrylamide oder -methacrylamide, z.B. Dimethylaminomethacrylamid, Dimethylaminoethylacrylamid und Diethylaminoethylacrylamid, Ester von ethylenisch ungesättigten Carbonsäuren mit Aminoalkoholen, Vinylpyrrolidon und dessen Derivate, Vinylimidazol und substituierte Vinylimidazole und Vinylsulfone, sowie Hydroxyverbindungen ungesättigter Carbonsäuren und Carbonsäureester, z.B. -Hydroxyacrylsäure und Hydroxypropylacrylat. Die ethylenisch ungesättigten Carbonsäuren können auch in neutralisierter oder teilneutralisierter Form eingesetzt werden. Z.B. eignen sich die Ammonium-, Amin- und Alkylisalze, vor allem die Natrium- und Kaliumsalze. Die genannten Monomeren können allein oder in Mischung der Polymerisation unterworfen werden, z.B. kann man Copolymerisate aus Acrylamid und Acrylsäure oder Copolymerisate aus Methacrylamid, Dimethylaminoethylacrylat und Acrylsäure herstellen.

Die Polymerisation kann jedoch auch in Gegenwart von ethylenisch ungesättigten Monomeren durchgeführt werden, die sich nur sehr wenig in Wasser lösen, z.B. Ester aus ethylenisch ungesättigten Carbonsäuren und C$_1$- bis C$_8$-Alkoholen wie Acrylsäuremethylester, Methacrylsäuremethylester und 2 Ethylenhexylacrylat, Vinylether, Acrylnitril und Methacrylnitril. Die Menge dieser Gruppe von Monomeren, die nur begrenzt in Wasser löslich sind, kann bis zu 75 Gew.-%, vorzugsweise 5 bis 40 Gew.-% am Aufbau der Copolymerisate beteiligt sein. Wichtig ist dabei nur, daß hydrophile Polymerisate erhalten werden. Die ethylenisch ungesättigten Verbindungen, die in Wasser löslich sind, können auch mit Verbindungen copolymerisiert werden, die zwei oder mehr ethylenisch ungesättigte Doppelbindungen aufweisen, so daß man vernetzte, jedoch noch in Wasser quellbare Polymerisate erhält. Geeignete Comonomeren dieser Art sind beispielsweise Butandioldiacrylat, Methylen-bis-acrylamid, Divinyldioxan, Ethylendivinylharnstoff und Pentaerythrittriallylether. Die vernetzend wirkenden Comonomeren mit zwei oder mehr Doppelbindungen werden bis höchstens 5 Gew.-%, bezogen auf die Gesamtmonomeren, bei der Polymerisation eingesetzt.

Die ethylenisch ungesättigten Monomeren werden in Wasser gelöst und, sofern die Monomeren nicht in Wasser löslich sind, darin emulgiert. Um eine stabile Emulsion der wasserunlöslichen Monomeren zu erhalten, ist es in der Regel erforderlich, einen Emulgator zu verwenden, beispielsweise nichtionische, anionische oder auch kationische Emulgatoren oder Mischungen aus nichtionischen und kationischen oder nichtionischen und anionischen Emulgatoren. Die Menge der Emulgatoren beträgt O,1 bis 2 Gew.-%, bezogen auf die in Wasser schwer löslichen bzw. unlöslichen Monomeren. Die wäßrige Lösung bzw. Emulsion der Monomeren enthält 3O bis 9O, vorzugsweise 5O bis 8O Gew.-% mindestens eines Monomeren.

Die Polymerisation erfolgt in Gegenwart üblicher Polymerisationsinitiatoren. Vorzugsweise verwendet man solche Polymerisationsinitiatoren, die in Wasser oder organischen Lösungsmitteln löslich sind, z.B. Wasserstoffperoxid, Natrium-, Kalium- oder Ammoniumperoxidisulfat. Außerdem eignen sich als Initiatoren die bekannten Redoxkatalysatorsysteme, wie Metallsalze und Peroxide, sowie wasserlösliche Azoverbindungen, wie 2,2'-Azo-bis-(2-amidinopropan)-hydrochlorid sowie Ketonperoxide, wie z.B. Acetylacetonperoxid. Bezogen auf die Monomeren verwendet man z.B. 1 bis 20 Gew.-% Wasserstoffperoxid oder der anderen wasserlöslichen Initiatoren. Es können aber auch nicht wasserlösliche organische Peroxide verwendet werden. Geeignet sind beispielsweise organische Peroxide, wie Dialkylperoxide, Perketale, Alkylperester, Diacylperoxide, Peroxidicarbonate und Hydroperoxide, Azoverbindungen und C-C-labile Verbindungen, z.B. Hexaphenylethan und 2,3-Dimethyl-2,3-diphenylbutan. Die Polymerisation kann auch bei relativ niedriger Temperatur (Raumtemperatur) durchgeführt werden, sofern man als Polymerisationsinitiatoren sogenannte Redox-Katalysatoren verwendet, z.B. Kombinationen organischer Peroxide und Ascorbinsäure oder Kombinationen aus Peroxidicarbonaten und Benzoin. Die Polymerisationsinitiatoren können auch zusammen mit einem geeigneten Beschleuniger eingesetzt werden. Geeignet sind beispielsweise Amine mit cyclischem oder phenylischem Grundkörper allein oder in Gegenwart organischer Übergangsmetallverbindungen. Bei der Polymerisation können auch Mischungen von verschiedenen Polymerisationsinitiatoren eingesetzt werden, die eine unterschiedliche Zerfallstemperatur aufweisen.

Zur Regelung des Molekulargewichts der Polymerisate können die bekannten Regler in den üblicherweise angewendeten Mengen verwendet werden.

Das erfindungsgemäße Verfahren kann kontinuierlich oder diskontinuierlich durchgeführt werden. Bei der kontinuierlichen Durchführung des Verfahrens wird die Monomeren-Lösung bzw. -Emulsion zusammen mit den Initiatoren und Hilfsstoffen (z.B. Regler) kontinuierlich der Reaktionszone zugeführt, während das sich bildende Polymerisat kontinuierlich oder in Abständen ein die Reaktionszone abgrenzendes Wehr passiert, um in die sich anschließende Nachreaktionszone zu gelangen. Pro Zeiteinheit wird dabei etwa die gleiche Menge an Polymerisat aus der Produktionszone entfernt wie an Monomeren in die Reaktionszone eingebracht wird. Zur Aufrechterhaltung eines bestimmten Korngrößenbereichs des Polymerisates in der Polymerisationszone kann es unter Umständen erforderlich werden, unter Zwischenschaltung eines Mahlschrittes einen Teil des gebildeten Polymerisates als feinkörniges Produkt kontinuierlich in die Produktionszone zurückzuführen (Korngrößensteuerung).

Die Polymerisation der Monomeren kann, je nach Reaktivität der Monomeren und der Wirksamkeit des Initiators, in einem weiten Temperaturbereich durchgeführt werden. Wesentlich ist lediglich, daß der Pulverzustand während der Polymerisation aufrechterhalten wird, d.h. die Temperatur sollte mindestens 10°C unterhalb des Schmelzpunkts bzw. des beginnenden Erweichungsbereiches des Polymerisates liegen, so daß die Polymerisatteilchen nicht miteinander verkleben. Eine weitere auf der Hand liegende Voraussetzung ist, daß die Temperatur so hoch ist, daß das jeweils verwendete Lösungsmittel aus der Polymerisationszone verdampft. Die Polymerisation kann bei Normaldruck, im Vakuum oder auch unter erhöhtem Druck, z.B. bis 25 bar, durchgeführt werden. Die Polymerisation erfolgt vorzugsweise in dem Temperaturbereich von 50 bis 150°C bei einem Druck von 0,1 bis 5 bar.

Um Polymerisatpulver mit einem besonders niedrigen Monomerengehalt herzustellen, wird im Anschluß an die Hauptpolymerisation eine Nachpolymerisation durchgeführt. Zu diesem Zweck wird eine Lösung des Initiators in einem organischen Lösungsmittel oder Wasserstoffperoxid als 10-50%ige Lösung in Wasser nach Abschluß der Hauptpolymerisation auf das Polymerisat in der Nachreaktionszone gesprüht.

Bevorzugt setzt man jedoch für die Nachpolymerisation diejenigen Initiatoren ein, die auch bei der Hauptpolymerisation verwendet werden.

Die Nachreaktionszone besteht aus zwei oder mehreren Kammern, die von im freien Querschnitt veränderbaren Einbauten (Wehren) begrenzt werden.

Im ersten Abschnitt der Nachreaktionszone erfolgt durch eine höhere Drehzahl der auf einer Welle befindlichen Paddel eine intensive Vermischung von Initiator und Polymerisat, wobei, wie in der Reaktionszone, das zugeführte Lösungs- bzw. Siedehilfsmittel über eine oder mehrere entsprechende Auslaßöffnungen wieder abgeführt wird, so daß der Pulverzustand des Mischbettes immer aufrechterhalten bleibt. Die aufzubringende Wärme wird über die beheizte Wandung bzw. die Reaktionsenthalpie der nachreagierenden Monomeren aufgebracht.

Durch die ständige Polymerisation in der Reaktionszone erfolgt eine Zunahme des Polymerisatvolumens, und damit ein Übertritt des Festproduktes durch den freien Querschnitt der Wehre von Kammer zu Kammer und schließlich in die Kammern der Nachreaktionszone und von diesen nach dem gleichen Prinzip in die weiteren Kammern einer Temperungs- und Austragszone. In beiden letzteren befinden sich ebenfalls auf einer Längswelle angeordnete Paddel, die sich aber im Gegensatz zu den Paddeln der Reaktionszone und der Nachreaktionszone auf einer anderen Welle befinden und mit niedrigerer Drehzahl bewegt werden, so daß das Polymerisat nur eine geringe Durchmischung erfährt und in einer Art Pfropfenströmung ggf. unter weiterem Eindüsen von Initiatorlösung und Entfernen des Lösungsmittels als Brüden und Zugabe von weiteren flüssigen, festen oder gasförmigen Stoffen durch die Kammern mit langer Verweilzeit und engem Verweilzeitspektrum transportiert wird.

Die unterschiedlichen Drehzahlen der Paddel in der Reaktionszone bzw. Nachreaktionszone einerseits und in der Temperungs- bzw. Austragszone andererseits werden durch zwei Antriebe erreicht, die von beiden Seiten je eine Welle mit Paddel antreiben. Aus der Temperungszone gelangt das Polymerisat über ein weiteres, von außen verstellbares Wehr in die Austragszone und kann dort über ein geeignetes Austragsorgan wie Zellradschleuse oder auch taktweise über eine mit 2 Kugelhähnen versehene rohrförmige Produktschleuse gegen Normaldruck ausgeschleust werden. Die einzelnen Zonen können gesondert auf unterschiedliche Temperaturniveaus eingestellt werden.

Die Erfindung wird nachstehend anhand der Zeichnungen näher erläutert. Es zeigen

Figur 1 eine Ausführungsform eines erfindungsgemäßen Feststoffbettpolymerisationsreaktors,
Figur 2 einen Schnitt entlang der Schnittlinie 2-2,
Figur 3 einen Schnitt entlang der Schnittlinie 3-3.

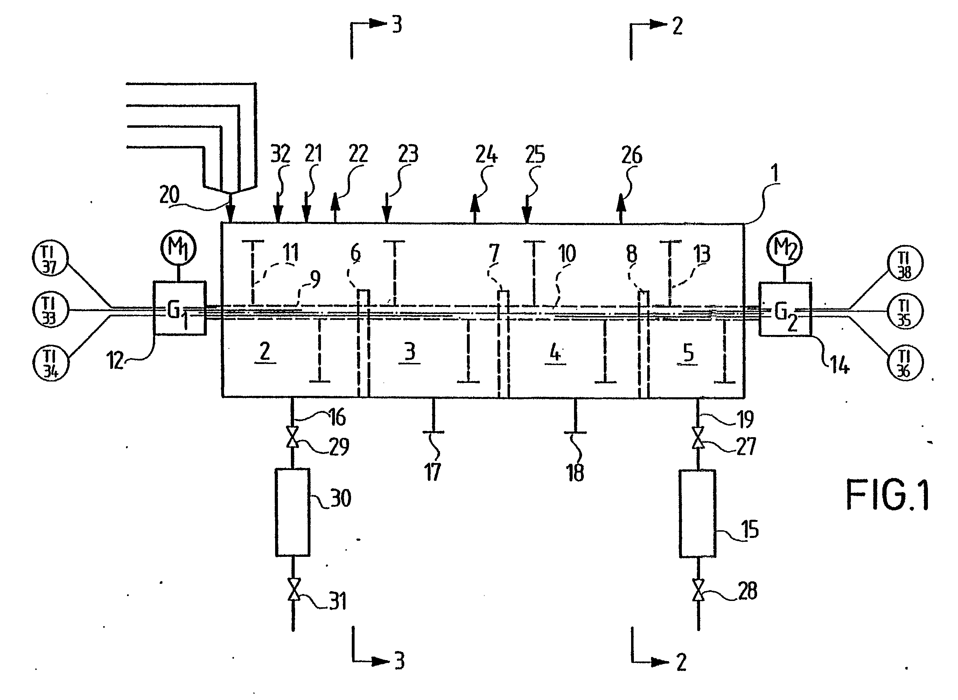

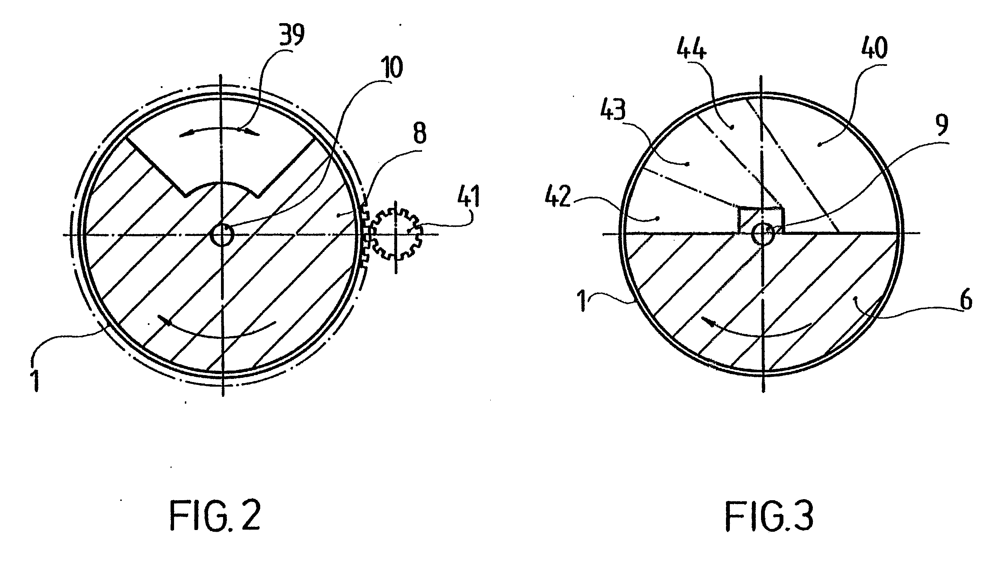

In Figur 1 ist ein horizontaler Feststoffbettpolymerisationsreaktor 1 dargestellt, der sich im wesentlichen in vier Zonen unterteilt, nämlich Reaktionszone 2, Nachreaktionszone 3, Temperzone 4 und Austragszone 5, wobei jede Zone durch variable Wehre in eine oder mehrere Kammern unterteilt sein kann. Im einfachsten Fall erfolgt die Unterteilung durch drei veränderbare Überlaufwehre 6, 7, 8, wobei die Wehre 6 und 7 durch Paßelemente in ihrer Überlaufhöhe eingestellt werden, bei dem Wehr 8 erfolgt die kontinuierliche Regulierung der Überlaufhöhe von außen. Der horizontale Feststoffbettpolymerisationsreaktor 1 wird von außen über die zylindrische Fläche und die beiden Stirnseiten temperiert, wobei jede Zone ihre eigene Temperierung besitzt. In den Reaktor sind von beiden Seiten durch die Antriebsaggregate 12 und 14 bewegte Wellen 9 und 10 mittig eingeführt und im Wehr 7 gemeinsam gelagert. Auf der Welle 9 sind an allen Innenflächen vorbeistreichende wandgängige, um 180° versetzte Paddel 11 so angebracht, daß sie eine intensive Produktbewegung in den Zonen 2 und 3 ermöglichen, ohne eine Förderwirkung über die Wehre zu erzeugen. Die um 180° versetzten wandgängigen Paddel 13 auf Welle 10 bewegen das Produkt in der Zone 4 nur leicht und erzeugen dabei keine Förderwirkung. In der Zone 5 schieben die Paddel das über das Wehr 8 gefallene Produkt in den Auslaßstutzen 19 und zur Schleuse 15, deren Befüllung und Entleerung über die Hähne 27 und 28 erfolgt. Die Stutzen 17, 18 sind vorgesehen für Zwischenproduktentnahme und können dann mit einem bauartgleichen Austragsschleusensystem, wie in der Austragszone 5, versehen werden. An der Reaktionszone 2 ist eine Produktausschleusung über die Schleuse 30 vorgesehen. Über eine nachfolgend angeordnete Mühle wird das zerkleinerte Produkt durch den Mahlgutrückführungsstutzen 21 der Zone 2 wieder zugeführt. Die Zuführung der Stoffe (Monomere, Siedehilfsmittel, Regler und Initiatoren) erfolgt über die temperierbare Lanze 2O. Die Stutzen 23 und 25 dienen zur Eingabe von Initiatoren und/oder sonstigen Hilfsstoffen, der Stutzen 32 zur Eingabe von $N_2$, die Stutzen 22, 24 und 26 zum Abzug von Brüden und Inertgasen. Die Temperaturen jeder Zone werden mit den in den Hohlwellen 9 und 10 angebrachten PT 100-Fühlern 33, 34 35 und 36 erfaßt. Die beiden Temperaturfühler 37 und 38 messen die Wellentemperaturen zwischen der jeweiligen Stirnseite und dem zugehörigen Antriebsaggregat, wobei die Temperaturdifferenzen zwischen der Meßstelle 33 und 34 bzw. 35 und 36 in den Zonen 2 und 3 bzw. 4 und 5 und den Meßstellen 37 und 38 ein Maß für den Wärmetransport entlang der Wellen und damit ein Maß für die Meßfehler der einzelnen Temperaturfühler sind. Die Figuren 2 und 3 sind Schnitte durch den horizontalen Feststoffbettpolymerisationsreaktor 1 an den Stellen 2-2 und 3-3.

Figur 2 zeigt schematisch, wie die Überlaufwehröffnung 39 im Wehr 8 mittels außenliegendem Antrieb 41 um ca. 360° um die Welle 10 im Feststoffbettpolymerisationsreaktor 1 verstellt werden kann.

Figur 3 zeigt schematisch, wie die Überlaufwehröffnung 40 mittels auf das Überlaufwehr 6 aufsetzbarer Paßelemente 42, 43 und 44 im Feststoffbettpolymerisationsreaktor 1 verändert werden kann.

Vorrichtung und Verfahren werden anhand der folgenden Beispiele weiter erläutert.

Beispiele

Als Reaktor diente ein liegender Metallzylinder von 1140 mm Länge und 207,6 mm lichter Weite der mit zwei getrennt angetriebenen Wellen, auf denen im Abstand von 100 mm Paddel befestigt waren, drei in ihrem freien Querschnitt veränderbaren Wehren als Einbauten und einem absteigenden Kühler ausgestattet war. Durch die beiden Antriebswellen und die eingebauten Wehre erfolgte eine Aufteilung des gesamten Reaktorvolumens in mehrere, verschieden bewegte Zonen. In die vordere Zone mündete eine Sprühdüse, durch die das Monomerengemisch, die Initiatorlösung und die Reglerlösung auf vorgelegtes und intensiv durchmischtes Polyamidgranulat als Vorlagematerial aufgesprüht wurde. In den Reaktor mündete außerdem eine Stickstoffleitung, um die Polymerisation unter Stickstoffatmosphäre durchzuführen. Die Beheizung der Reaktorzonen erfolgte mit Hilfe mehrerer Heizkreise. Das Monomerengemisch wurde mit der Lösung des Polymerisationsinitiators in einem statischen Mischer gemischt. In der Leitung, durch die das Monomerengemisch zum statischen Mischer geführt wurde, war ein Wärmetauscher eingebaut, so daß bei Bedarf gekühlt werden konnte. Zwischen Reaktor und absteigendem Kühler ist ein Abscheider eingebaut, um evtl. durch den Stickstoffstrom bzw. das verdampfende überschüssige Monomere oder Siedehilfsmittel mitgerissene Feststoffe abzuscheiden. Der Reaktor war zur Kontrolle der Guttemperatur mit mehreren in das Gut reichenden Temperaturmeßsonden in den einzelnen Zonen ausgerüstet. Zur gleichzeitigen Durchführung von Polymerisation und Neutralisation in der Reaktionszone wurde dieser entweder mit einer Feststoffdosiervorrichtung, beispielsweise einer Dosierschnecke, verbunden, über welche pulverförmiges Neutralisierungsmittel in die Reaktionszone des Reaktors dosiert wurde, oder in diese Zone mündete eine zweite Sprühdüse, durch die das flüssige Neutralisierungsmittel ebenfalls auf das vorgelegte Granulat aufgesprüht wurde.

Es ist aber ebenso möglich, in der 1. Kammer der Reaktionszone die Polymerisation und in der 2. Kammer die Neutralisation durchzuführen. Genauso ist es möglich in der ersten Kammer nur eine Teilneutralisation und in der 2. Kammer eine Vollneutralisation mit dem gleichen oder einem anderen Neutralisationsmittel durchzuführen. Die Reaktionszone besitzt am Boden einen Produktaustrag, über den eine Teilmenge des in der Reaktionszone gebildeten Polymerisates ausgetragen und in einer Mühle oder einem Walzenstuhl zerkleinert und wieder in die Reaktionszone zurückgeführt werden kann, um stets eine ausreichend Zahl von Keimen für neue Polymerisatteilchen zu gewährleisten.

Das Wehr nach der Reaktionszone wurde in seinem freien Querschnitt so eingestellt, daß in dieser ein Erfüllungsgrad von ca. 70 % der Kammervolumina erreicht wurde, das gleiche gilt für die Kammern der Nachreaktionszone. Das von außen verstellbare Wehr nach der Temperungszone wurde ebenfalls so eingestellt, daß dort ein Füllgrad von ca. 60 - 70 % gehalten werden konnte, was einer mittleren Verweilzeit von ca. 4 Std. nach der Reaktionszone entspricht.

Die Antriebswelle der Reaktions- und Nachreaktionszone hatte eine Drehzahl von 80 Upm, die Antriebswelle der Temper- und Austragszone von 25 Upm.

Die in den Beispielen angegebenen Teile sind Gewichtsteile, die Angaben in Prozent beziehen sich auf das Gewicht der Stoffe, sofern nichts anderes angegeben ist. Die K-Werte wurden nach H. Fikentscher, Cellulose-Chemie 13, 48-64 und 71-74 (1932) in 1%iger wäßriger Lösung bei einer Temperatur von 25°C gemessen; dabei bedeutet $K = k \cdot 10^3$.

Beispiel 1

Herstellung eines durch Natrium- und Magnesiumionen neutralisierten Polymerisates auf Basis Acrylsäure:

In der oben beschriebenen Vorrichtung wurden 15 kg eines granulierten Polyamids aus Adipinsäure (AS) und Hexamethylendiamin mit einem Korndurchmesser von 2,5 - 3,5 mm vorgelegt, durch Stickstoff inertisiert und unter intensiver Umwälzung auf eine Temperatur von 140°C erwärmt.

Eine Lösung von 3060 g AS und 333 g Wasser wurde in einem statischen Mischer mit einer Initiatorlösung aus 578 g Wasserstoffperoxid (50%ig) und 366 g Wasser sowie mit einer Reglerlösung aus 293,3 g 2-Merkaptoethanol und 168,6 g Wasser zusammengeführt und kontinuierlich pro Stunde auf den bewegten Feststoff aufgesprüht. Gleichzeitig wurde eine Lösung von 680 g Natriumhydroxid in 1010 g Wasser bei einer Temperatur der Lösung von 80°C, ebenfalls pro Stunde gleichmäßig auf die intensiv bewegte Oberfläche des Feststoffes in der ersten Kammer der Reaktionszone aufgesprüht, während nach Passieren des 1. Wehres auf das vorneutralisierte Polymerisat in der 2. Kammer der Polymerisationszone mittels einer Feststoffdosierschnecke 462,6 g Magnesiumoxid (100%ig) als Feststoff ebenfalls im Verlaufe von 1 h gleichmäßig eingetragen werden. Die Polymerisations-bzw. Neutralisationstemperatur betrug 140°C. Während der Polymerisation wurde der Pulverzustand in der Reaktionszone aufrechterhalten und das zugeführte Wasser zusammen mit dem aus der Neutralisation freiwerdenden Wasser kontinuierlich abdestilliert (ca. 2000 g Kondensat pro Stunde). Über eine Austragsvorrichtung wurden kontinuierlich 1000 g pro Stunde des neu gebildeten Polymerisates ausgetragen, in einem Walzenstuhl auf 3 mm zerkleinert und in die Reaktionszone zurückgeführt.

In der Nachreaktionszone des Reaktors werden zur weiteren Absenkung des Restmonomerengehaltes 639,2 g Wasserstoffperoxid (50%ig) kontinuierlich pro Stunde zugegeben, wobei wiederum die zugefahrene Wassermenge kontinuierlich abdestilliert. Die Außentemperatur des Reaktors wird in dieser Zone so eingestellt, daß eine Innentemperatur von 140°C im Pulverbett erhalten bleibt, ebenso in der folgenden Temperungszone, in die weitere 319,2 g Wasserstoffperoxid pro Stunde kontinuierlich versprüht werden. Nach einer mittleren Verweilzeit von 4 - 5 Stunden wird das gebildete Polymerisat als körniges Produkt in der Austragszone über eine kugelhahn gesteuerte rohrförmige Produktschleuse gegen Normaldruck ausgefahren. Der im gesamten Reaktor vorhandene Gasdruck betrug ca. 1,7 bar und wird mittels einer Druckregelvorrichtung während der gesamten Betriebszeit konstant gehalten. Das Polymerisat hatte einen Restmonomerengehalt an Acrylsäure von 0,1 % und besaß einen K-Wert von 30 (1%ig in Wasser).

Beispiel 2

Herstellung eines durch Natrium und Magnesiumionen neutralisierten Copolymerisates auf Basis Acrylsäure, Styrol, Butylacrylat (90 : 5 : 5)

In der oben beschriebenen Vorrichtung werden 15 kg eines getrockneten Suspensionspolymerisates aus Natriumacrylat mit Korndurchmessern zwischen 1,5 mm und 3,5 mm vorgelegt, durch Stickstoff inertisiert und auf eine Temperatur von 85°C erwärmt.

Eine Lösung aus 72 kg Acrylsäure, 4 kg Styrol, 4 kg n-Butylacrylat und 12,8 kg Natriummethylat wird in einem Lösemittelgemisch, bestehend aus 65 l Methanol und 3,5 l Wasser hergestellt. Diese wird in einem statischen Mischer mit einer Initiatorlösung aus 0,6 kg Octanoylperoxid und 1,8 kg t-Butyl-per-2-ethylhexanoat in 24 l Methanol zusammengeführt und im Verlauf von 24 Stunden sukzessive auf das bewegte Vorlagematerial in der ersten Kammer der Reaktionszone mit Hilfe einer Sprühlanze aufgesprüht.

Die Polymerisationstemperatur in der Reaktionszone liegt bei 85°C. Der Druck im gesamten Reaktor beträgt 1 bar. Während der Polymerisation wird der Pulverzustand im Reaktor aufrechterhalten. Das zugeführte Methanol-Wasser-Gemisch wird kontinuierlich über Brüdenstutzen abgeführt.

In die zweite Kammer der Reaktionszone wird über eine Feststoffdosieranlage Magnesiumoxid (11 kg/24 h) kontinuierlich eingebracht und mit dem Produkt aus der ersten Kammer der Reaktionszone abgemischt.

In der Nachreaktionszone wird zur Absenkung des Restmonomerengehaltes eine Initiatormischung aus 0,6 kg Octanoylperoxid in 1,5 l Methanol im Verlauf von 24 h verteilt. Die Temperatur in dieser Zone beträgt 95°C.

Das Produkt aus der Nachreaktionszone wird in der Temperungszone um weitere 5°C auf 100°C erwärmt und dort - praktisch ohne Axialvermischung - 2,5 Stunden getempert.

Das über das Wehr in die Austragszone eintretende Produkt wird auf 85°C abgekühlt und über eine Schleuse kontinuierlich ausgetragen.

Man erhält ein wasserlösliches Copolymerisat mit einem K-Wert von 110 (1%ig in Wasser) und einem Restmonomerengehalt von deutlich weniger als 1 %.

Beispiel 3

Herstellung eines teilweise mit Ethanol veresterten Copolymerisates aus Maleinsäureanhydrid und Vinylmethylether

In der oben beschriebenen Vorrichtung werden 15 kg eines in benzolischer Suspension hergestellten und anschließend getrockneten Maleinsäureanhydrid (MSA)/Vinylmethylether-Copolymerisates vom K-Wert 45 als körniger Feststoff vorgelegt, inertisiert und auf 70°C aufgeheizt. Der Druck im Reaktor wird auf 5 bar eingestellt.

3,6 kg MSA werden zunächst mit 10 kg Vinylmethylether statisch gemischt und dann mit der Initiatorlösung aus 0,2 kg Cyclohexylperoxidicarbonat in 0,8 kg Vinylmethylether weiterhin vermischt und über eine Sprühlanze kontinuierlich pro Stunde in die Reaktionszone eingebracht.

Die Polymerisationstemperatur in dieser Zone liegt bei 68°C. Der Pulverzustand bleibt in allen Zonen des Reaktors erhalten. Der überschüssige, nicht einpolymerisierte Vinylmethylether wird über eine Brüdenleitung abgeführt, außerhalb des Reaktors kondensiert und erneut im Prozeß eingesetzt.

Das Produkt aus der Reaktionszone wird in der Nachreaktionszone mit 1,6 kg pro Stunde Ethanol versetzt. Das verwendete Ethanol enthält geringe Mengen an Schwefelsäure.

Das Produkt aus der radial und axial gut durchmischten Nachreaktionszone gelangt über ein Wehr in die praktisch ausschließlich radial durchmischte Temperungszone und wird dort bei einer mittleren Verweilzeit von 2,5 h bei erhöhter Temperatur von 80°C zur Reaktionsvollendung getempert.

Das über ein Wehr in die Austragszone eintretende Produkt wird mittels einer Schleuse auf Normaldruck entspannt und taktweise ausgetragen.

Man erhält ein alternierendes, alkohollösliches Copolymerisat aus teilveresterter Maleinsäure mit Vinylmethylether vom K-Wert 45 (1%ig in Anon (Cyclohexanon)). Der Restmonomerengehalt an MSA liegt unter 0,1 %.

**Patentansprüche**

1. Horizontaler Feststoffbettpolymerisationsreaktor (1), der in mehrere Zonen, z.B. eine Reaktionszone (2), eine Nachreaktionszone (3), eine Temperzone (4) und eine Produktaustragszone (5) unterteilt ist, mit Ein- und Auslaßöffnungen zur Stoffzuführung und Stoffabführung in die und/oder aus den Zonen, wobei die Zonen durch Wehre (6, 7, 8) über einen Teil des Reaktorquerschnitts voneinander abgetrennt sind, dadurch gekennzeichnet, daß in den Feststoffbettpolymerisationsreaktor (1) zwei horizontale, voneinander unabhängige Antriebswellen (9, 10) mit transversal angeordneten Mischelementen (11, 13) koaxial und mittig eingeführt sind.

2. Feststoffbettpolymerisationsreaktor nach Anspruch 1, dadurch gekenzeichnet, daß die Wehre (6, 7, 8) in ihrem freien Querschnitt veränderbar sind.

3. Feststoffbettpolymerisationsreaktor nach Anspruch 1 und 2, dadurch gekennzeichnet, daß die Wehre (6, 7, 8) um die Antriebswellen (9, 10) drehbar angeordnet sind.

4. Feststoffbettpolymerisationsreaktor nach Anspruch 1 bis 3, dadurch gekennzeichnet, daß in den Antriebswellen (9, 10) Temperaturfühler (33 bis 38) für die einzelnen Zonen (2 bis 5) angebracht sind.

5. Feststoffbettpolymerisationsreaktor nach Anspruch 1 bis 4, dadurch gekennzeichnet, daß die Antriebswelle (9) zur Antriebswelle (10) konzentrisch angeordnet ist.

**Claims**

1. A horizontal solid-bed polymerization reactor (1) which is divided into a plurality of zones, for example a reaction zone (2), an after-reaction zone (3), a heating zone (4) and a product discharge zone (5), and possesses inlet and outlet openings for feeding substances into the zones and/or removing substances from the zones, the zones being separated from one another over a part of the reactor cross-section by means of weirs (6, 7, 8), wherein two horizontal drive shafts (9, 10) which are independent of one another and possess transverse mixing elements (11, 13) are introduced into the solid-bed polymerization reactor (1) coaxially and in the middle.

2. A solid-bed polymerization reactor as claimed in claim 1, wherein the free cross-sections of the weirs (6, 7, 8) are variable.

3. A solid-bed polymerization reactor as claimed in either of claims 1 and 2, wherein the weirs (6, 7, 8) are arranged so that they are rotatable about the drive shafts (9, 10).

4. A solid-bed polymerization reactor as claimed in any of claims 1 to 3, wherein temperature sensors (33 to 38) for the individual zones (2 to 5) are mounted in the drive shafts (9, 10).

5. A solid-bed polymerization reactor as claimed in any of claims 1 to 4, wherein the drive shaft (9) is arranged concentrically with respect to drive shaft (10).

**Revendications**

1. Réacteur de polymérisation en lit de matière solide (1), horizontal, qui est subdivisé en plusieurs zones, par exemple une zone de réaction (2), une zone de post-réaction (3), une zone de recuit (4) et une zone de sortie du produit (5), avec des ouvertures d'entrée et de sortie pour l'amenée de matière et l'enlèvement de matière dans les et/ou hors des zones, les zones étant séparées les unes des autres par des barrages (6, 7, 8) sur une partie de la section du réacteur, caractérisé par le fait que dans le réacteur de polymérisation en lit de matière solide (1) sont placés coaxiaux et centrés deux arbres d'entraînement (9, 10) horizontaux indépendant l'un de l'autre, munis d'éléments mélangeurs (11, 13) disposés transversalement.

2. Réacteur de polymérisation en lit de matière solide (1) selon la revendication 1, caractérisé par le fait que les barrages (6, 7, 8) sont modifiables en leur section libre.

3. Réacteur de polymérisation en lit de matière solide (1) selon les revendications 1 et 2, caractérisé par le fait que les barrages (6, 7, 8) sont montés tournants autour des arbres d'entraînement (9, 10).

4. Réacteur de polymérisation en lit de matière solide (1) selon les revendications 1 à 3, caractérisé par le fait que dans les arbres d'entraînement (9, 10) sont montés des capteurs de température (33 à 38) pour les différentes zones (2 à 5).

5. Réacteur de polymérisation en lit de matière solide (1) selon les revendications 1 à 4, caractérisé par le fait que l'arbre d'entraînement (9) est disposé concentriquement à l'arbre d'entraînement (10).

FIG.1

EP 0 199 296 B1

FIG.3

FIG.2